# EUROPEAN PATENT APPLICATION

(11) **EP 1 279 813 A2**
(43) Date of publication of application: **29.01.2003**
(21) Application number: 02016638.5
(22) Date of filing: 25.07.2002
(51) Int. Cl.: F02D 23/00, F02B 37/00

(54) **Control device for a vehicle and control method thereof**

(30) Priority: 26.07.2001 JP 2001226727
(71) Applicant: TOYOTA JIDOSHA KABUSHIKI KAISHA, Aichi-ken 471-8571 (JP); Denso Corporation, Kariya-city, Aichi-pref., 448-8661 (JP)
(72) Inventor: Ito, Yasushi, Toyota-shi, Aichi-ken 471-8571 (JP); Sasaki, Satoru, Kariya-city, Aichi-pref. 448-8661 (JP)
(74) Representative: Leson, Thomas Johannes Alois, Dipl.-Ing.

(57) **Abstract**

Provided is a control device for a vehicle, for improving acceleration response by increasing a boost pressure without making the exhaust gas worse. A control device for a vehicle having a supercharger (3) for generating a boost pressure according to an operating state of an internal combustion engine (1) and a transmission (17) for changing a speed of the internal combustion engine in accordance with a gear ratio, further includes acceleration demand determining means (S1) for determining whether there has been an acceleration demand, and gear ratio controlling means (S4) for changing the speed of the internal combustion engine (1) so as to increase the boost pressure by changing the gear ratio when the acceleration demand is determined to have occurred.

## Description

### BACKGROUND OF THE INVENTION

### 1. FIELD OF THE INVENTION

The invention relates generally to a control device for a vehicle in which is mounted an internal combustion engine with a supercharger such as a turbocharger. More specifically, the invention relates to a device for controlling an acceleration timing of the vehicle based on an acceleration demand.

### 2 . DESCRIPTION OF THE RELATED ART

Internal combustion engines, such as diesel engines, are often provided with superchargers. Using a supercharger enables the charge of air into the combustion chamber to be increased, which in turn increases output torque of the internal combustion engine. However, when the supercharger is driven by output of the internal combustion engine, i.e., with a mechanical type supercharger, power from the internal combustion engine is increasingly lost as the shaft torque increases, which results in a relative deterioration in fuel consumption. With a turbocharger, which is driven by exhaust given off by the internal combustion engine, however, there is little loss of power even as the shaft torque increases, making it possible to improve fuel efficiency. On the other hand, with a turbocharger, an irreversible delay is generated in the increase in boost pressure during acceleration because the boost pressure increases as a result of an increase in the amount of exhaust discharged from the internal combustion engine.

Therefore, in a diesel engine, for example, when the amount of fuel supplied to the engine (i.e., the fuel injection quantity) is increased immediately after there is acceleration operation, smoke is generated due to the fact that there is a relative delay in the increase of boost pressure. In order to avoid this problem, the amount of fuel supplied to the internal combustion engine is increased as the boost pressure increases. With this type of control, however, the engine load is delayed, which causes a delay in the increase in torque of the internal combustion engine, in turn adversely affecting acceleration response.

In order to avoid adversely affecting the acceleration performance by a response delay of the turbocharger during acceleration, a device for performing gear ratio control by a continuously variable transmission was proposed, which is disclosed in Japanese Patent Application Laid-Open Publication No. 7-156693. According to the device disclosed in this publication, the gear ratio is controlled such that the engine speed increases when a throttle opening (a depression angle of an accelerator pedal) increases. As a result, as opposed to just the load increasing, the horsepower of the engine also increases such that acceleration performance is able to be maintained.

Control of the gear ratio (hereinafter referred to as "shift control") of an automatic transmission such as a continually variable transmission or a stepped transmission is performed based on a running state of the vehicle. A demanded acceleration amount indicated by an accelerator opening (a depression amount of an accelerator pedal) is normally included in a parameter indicating that running state. When there has been an acceleration demand, a shift (a downshift) in a direction to increase the gear ratio is performed such that output shaft torque, or drive torque, in accordance with the acceleration demand is generated.

With the device of that publication, because gear ratio control is performed to increase the engine speed when there is an acceleration demand, the gear ratio control increases the engine speed, and at the same time, increases the output shaft torque or drive torque. This gear ratio control is therefore no different than normal control during acceleration in a vehicle having an automatic transmission. In other words, the device according to the aforementioned publication provides control for increasing the horsepower output by the internal combustion engine, but does not provide control that improves acceleration performance by making a turbocharger function efficiently. Therefore, the engine speed is increased more than is necessary, which may result in a deterioration of fuel efficiency, or in a sense of discomfort or deterioration in ride arising from noise or vibration following an increase in engine speed.

### SUMMARY OF THE INVENTION

In view of the foregoing technical problems, it is an object of this invention to provide a control device for a vehicle able to improve acceleration performance without making the exhaust gas worse, by making a supercharger function efficiently during acceleration.

Means to achieve this object, and the operating effect thereof, will hereinafter be described.

A control device for a vehicle according to one exemplary embodiment of this invention has a supercharger for generating a boost pressure in accordance with an operating state of an internal combustion engine, and a transmission for changing a gear ratio. This control device is characterised by further including acceleration demand determining means for determining whether there has been an acceleration demand, and gear ratio controlling means for changing the speed of the internal combustion engine so as to increase the boost pressure by changing the gear ratio when the acceleration demand has been determined to have occurred.

With this type of configuration, even if the amount of fuel supplied to the internal combustion engine increases based on the acceleration demand, the exhaust gas will not deteriorate, e.g., smoke will not be generated, because the delay in increase in the boost pressure is prevented or minimized. Further, acceleration response is improved because the increase in the fuel supply quantity does not have to be delayed. Moreover, because this transmission control is not control to increase the gear ratio for the purpose of increasing the output shaft torque or drive torque along with an acceleration demand, the fuel efficiency and unnecessary speed increase of the internal combustion engine are able to be minimized.

### BRIEF DESCRIPTION OF THE DRAWINGS

Next, each of the embodiments of this invention will be described with reference to the accompanying drawings, in which:
FIG. 1 is a flowchart showing a control example according to a control device according to one embodiment of this invention;
FIG. 2 is a time chart showing a typical change in an engine speed, gear ratio, boost pressure, and fuel injection quantity when the control shown in FIG. 1 is performed;
FIG. 3 is a flowchart showing another control example according to a control device according to another embodiment of this invention; and
FIG. 4 is a typical view showing one example of a power system of a vehicle in which is mounted an internal combustion engine, which is the subject of this invention.

### DESCRIPTION OF THE PREFERRED EMBODIMENTS

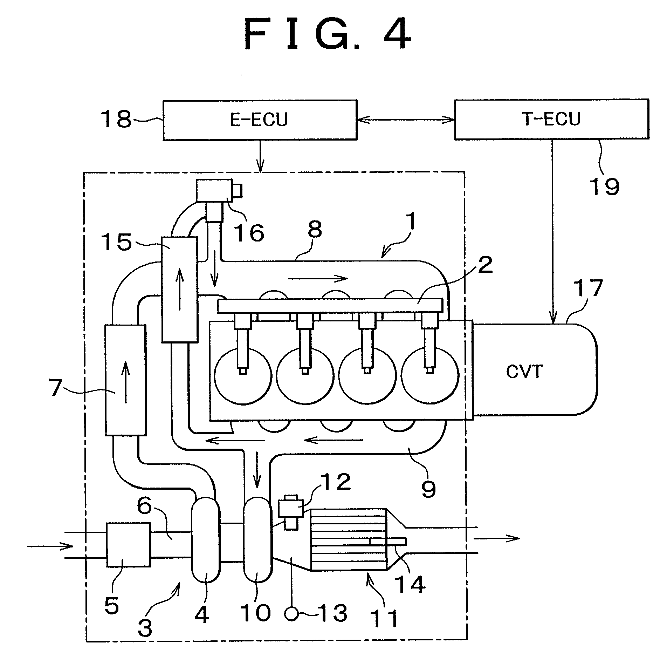

Next, an exemplary embodiment of this invention will be described. The internal combustion engine mounted in a vehicle, which is the subject of this invention, is a power unit that burns a fuel and outputs power, such as a diesel engine or a gasoline engine. FIG. 4 shows a representative direct injection diesel engine (hereinafter simply referred to as "engine") 1 which is used as the power source of the vehicle. This engine 1 is an internal combustion engine in which the fuel is injected directly into cylinders. The engine 1 is provided with a common rail type electronically controlled fuel injection system 2, which may be of a well-known structure, that enables the fuel to be injected at a high pressure.

The engine 1 shown in FIG. 4 is also provided with an exhaust turbine type supercharger, i.e., a turbocharger 3. An intake pipe 6 in which is disposed an air cleaner 5 is connected to an intake port of a compressor 4 of the turbocharger 3, and an intake manifold 8 is connected to a discharge port of the compressor 4 via an inter-cooler 7 for lowering the intake air temperature.

Also, an exhaust manifold 9 which is communicated to each cylinder is connected to an air inlet of a turbine 10 of the turbocharger 3. Further, a catalytic converter 11 having an exhaust purification catalyst is connected to an air outlet of the turbine 10. An air-fuel ratio sensor 12 and a pressure sensor 13 that detects a pressure of exhaust flowing into the catalytic converter 11 are disposed upstream of the catalytic converter 11. Moreover, a temperature sensor 14 for detecting the catalyst temperature is provided in the catalytic converter 11. A path leading from the exhaust manifold 9, through the catalytic converter 11, to a opening, not shown, to the outside air serves as an exhaust path. Accordingly, the turbocharger 3 increases a boost pressure according to an increase in the amount of exhaust generated by the engine 1, i.e., according to an operating state of the engine 1.

Moreover, the engine 1 shown in FIG. 4 is provided with an exhaust gas recirculation system to reduce NOx in the exhaust. That is, in the engine 1, the exhaust manifold 9 and the intake manifold 8 are connected together through an EGR cooler 15 for cooling the recirculating exhaust and an EGR valve 16 for starting and stopping recirculation of the exhaust, as well as keeping a recirculation rate (EGR rate) constant.

A continuously variable transmission (hereinafter referred to as "CVT") 17 is connected to an output side of this engine 1. This CVT 17 is a transmission that is able to continuously change gear ratios, and may be of a belt type or a traction type (troidal type).

In this engine 1, an engine electronic control unit (hereinafter referred to as "E-ECU") 18 for electronically controlling a fuel injection quantity of the engine 1, an injection timing of that fuel injection quantity, starting and stopping of recirculation of the exhaust gas, an opening of a throttle valve, not shown, and the like, is connected to a transmission electronic control unit (hereinafter referred to as "T-ECU") 19 for controlling the CVT 17. Both of the E-ECU 18 and T-ECU 19 are mainly constituted by microcomputers. The E-ECU 18 and T-ECU 19 are constructed so as to control the throttle opening, the fuel injection quantity (i.e., engine load), the starting and stopping of the engine 1, or the gear ratio of the CVT 17, i.e., engine speed, and the like based on a demanded output amount (demanded acceleration amount) indicated by an accelerator opening (angle of depression of an accelerator pedal), vehicle speed, engine water temperature, oil temperature of the CVT 17, detection signals from each of the sensors air-fuel ratio sensor 12, pressure sensor 13, and temperature sensor 14, signals indicative of whether a brake is ON or OFF, signals indicative of whether an ignition (IG) is ON or OFF, and the like.

In the engine 1, fuel is injected into each of the cylinders and combusted. From this combustion, mechanical energy is generated which is then output as driving force. The amount of fuel consumed for this purpose is controlled to be as little as possible while still being within a range to satisfy the demanded amount of output. Also, pollutants such as NOx generated by combustion of the fuel in the cylinders is absorbed by the catalyst in the catalytic converter 11. Then, before the catalyst becomes saturated, the amount of fuel in the exhaust gas increases producing an atmosphere conducive to reduction, and nitrate nitrogen absorbed in the catalyst is reduced and discharged as nitrogen gas, i.e., recovery process is performed in which the purification performance of the catalyst is recovered.

In the engine 1, fundamentally the amount of fuel consumed according to the demanded driving amount is minimized. As a brief example of this control, a target driving force is obtained based on a throttle opening indicative of the demanded driving amount and the vehicle speed. A target output is then obtained based on this target driving force and the vehicle speed. On one hand based on this target output, a target engine speed, i.e., a target input engine speed to be input to the transmission, is obtained. This may be obtained by obtaining in advance the engine speed at which the minimum amount of fuel will be consumed with respect to the output of each gear ratio, storing that engine speed as a map in advance, and then obtaining the target engine speed based on the target output and that map. Shifting control of the CVT 17 may then be performed so as to achieve that target engine speed.

This shifting control may be performed, for example, by first order delay feedback control based on a difference between the target input engine speed and the current input engine speed. This type of first order delay feedback control is used to change the gear ratio by a "predetermined mode" in this invention.

On the other hand, a target engine torque is obtained based on the target output and the engine speed. The engine load (more specifically, the throttle opening or the fuel injection quantity) is then controlled such that the target engine torque is output.

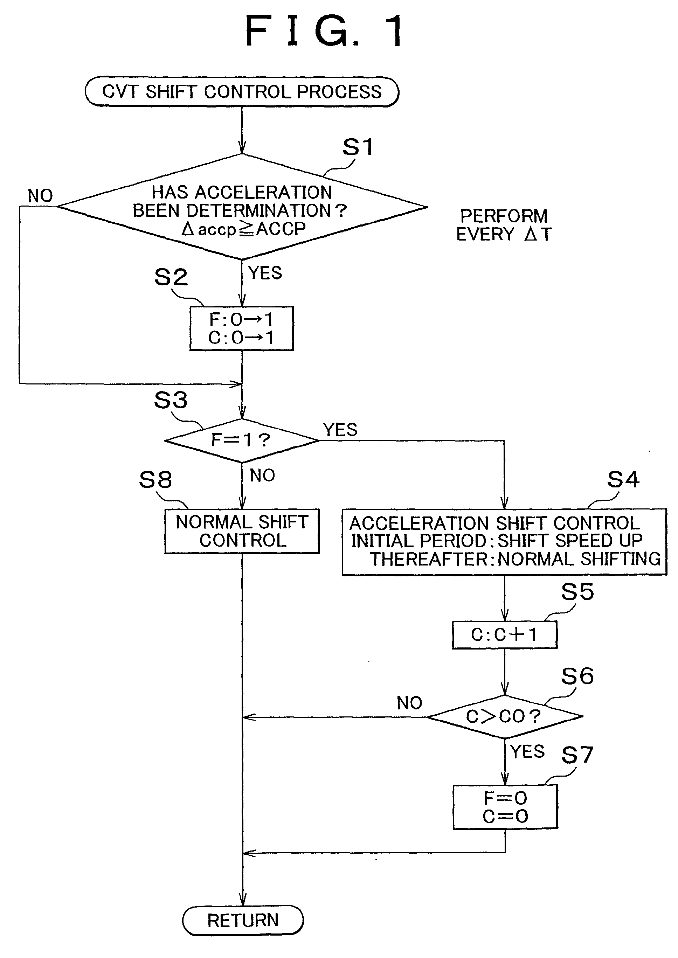

This type of gear ratio control and engine load control are also performed in the same manner when there is an acceleration demand in which the accelerator pedal, not shown, is depressed. In this invention, however, when there is a gear shift following supercharging, the following specific control is performed during the initial period of acceleration to reduce the delay while the boost pressure increases. FIG. 1 is a flowchart showing an example of that control, which is performed repeatedly at short, predetermined intervals of time Δt.

Referring to FIG. 1, it is first determined whether there is an acceleration demand (acceleration determination) (Step S1). This determination is made based on a signal indicative of either the throttle opening or an increase in the fuel supply quantity (fuel injection quantity). As one example of this, it is determined whether a change ratio Δaccp of the accelerator opening is equal to, or greater than, a predetermined determination reference value ACCP. When the change ratio Δaccp of the accelerator opening is equal to, or greater than, this determination reference value ACCP, it is determined that there has been an acceleration demand which requires operation of the supercharger.

When the determination is Step S1 is YES due to the fact that there is an acceleration demand, a flag F is set to "engine 1" and a counter C is set to "engine 1" (Step S2). Next, it is determined whether the flag F is "engine 1" (Step S3). Because the flag F is set to "engine 1" in Step S2 immediately after it is determined that there is an acceleration demand, the determination in Step S3 is YES.

In this case, that is, immediately after it has been determined that there is an acceleration demand, acceleration shift control is performed (Step S4). This acceleration shift control increases the speed (hereinafter referred to as "shifting speed") at which gear ratios are changed to faster than normal for a predetermined period of time from the start of control following an acceleration demand, and then after the predetermined period of time has passed, finishes changing the gear ratio to the target input engine speed at the normal shifting speed. Normal shifting speed is a shifting speed according to the first order delay feedback control based on the difference between the target input engine speed and the current input engine speed, in which the target input engine speed is obtained based on the demanded driving amount, such as the amount of depression of the accelerator pedal, and the vehicle speed and the like. The shifting speed determined by that control is slower than the fastest shifting speed that the CVT 17 is mechanically able to perform. In contrast, according to this exemplary embodiment, during the initial period of acceleration, which is from after acceleration begins for a predetermined period of time, the gear ratio is changed at a shifting speed that is faster than the normal shifting speed according to the first order delay feedback control based on the target input engine speed.

The shifting speed during this initial period of acceleration is increased in order to bring about a rapid increase in boost pressure. Therefore, the predetermined period of time for increasing the gear ratio so that it is greater than normal can be a preset time (a timer value). Also, this predetermined period of time can be set according to either the vehicle speed prior to acceleration or the engine speed (prior to acceleration). Furthermore, this predetermined period of time can also be the period until a predetermined engine speed or boost pressure is achieved according to either the vehicle speed prior to acceleration or the engine speed (prior to acceleration).

Furthermore, it is preferable that the amount of increase in the shifting speed with respect to the normal shifting speed be set so as not to bring about a sudden change in driving torque or engine speed, and so that torque is not consumed unnecessarily due to an increase in inertia force following a change in engine speed.

After the control in Step S4 is performed, the counter C is increased (Step S5). That is, the counter C increases by "engine 1" each time the routine shown in FIG. 1 is performed once. Then it is determined in Step S6 whether the value of the counter C is larger than a preset reference value C0. This reference value C0 is a value which corresponds to a time which is both longer than the predetermined period of time and which is approximately equal to, or somewhat shorter than, the time required for a shift to be completed following an acceleration demand.

When the determination in Step S6 is NO, i.e., when the value of the counter C has not exceeded the reference value C0, control returns. In this case, when the determination in Step S1 is performed again, the result is NO. Accordingly, control proceeds to Step S3, where it is determined whether the flag F has been set to "engine 1". When the acceleration shift control is not yet complete, the flag F is set to "engine 1" and control proceeds to Step S4. The acceleration shift control then continues just as before.

After the predetermined period of time that was set as a period during which the shift speed increases has passed, the gear ratio is changed at normal speed, i.e., at the speed according to first order delay feedback control based on the difference between the target input engine speed and the actual input engine speed. Then when time passes so that the value of the counter C exceeds the reference value C0, the determination in Step S6 is YES. In this case, the flag F and the counter C are both reset to "0" (Step S7) and control returns.

After the acceleration shift control is complete, or after control to increase the shifting speed in the acceleration shift control is complete, the determination in Step S3 is NO, such that control proceeds to Step S8, where normal shift control is performed. This normal shift control is shift control according to first order delay feedback control based on the difference between the target input engine speed, which is determined based on the demanded driving amount, the vehicle speed and the like, and the actual input engine speed.

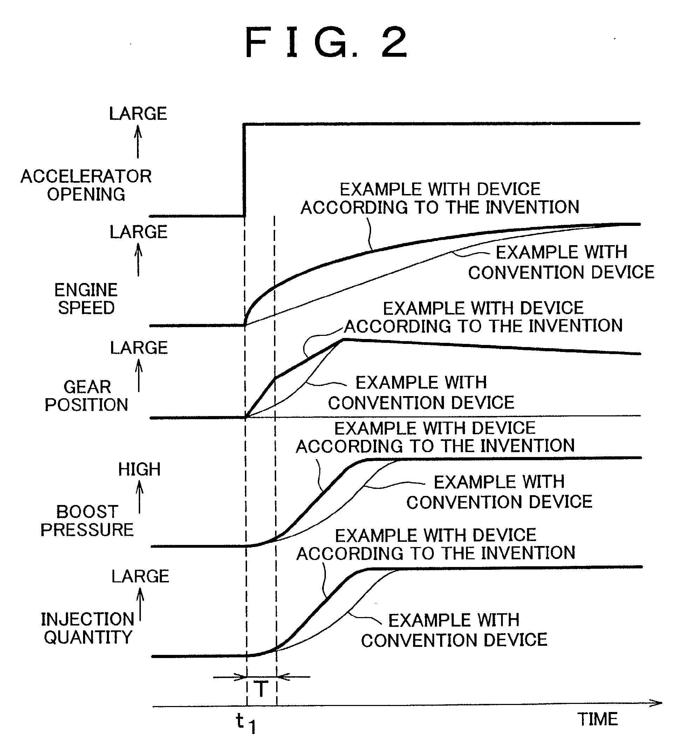

FIG. 2 shows a change in the engine speed, gear ratio (gear position), boost pressure, and fuel injection quantity when the acceleration shift control is performed. For comparison, those changes according to convention control in which acceleration shift control is not performed are also shown in the figure. As shown in FIG. 2, the accelerator opening increases and the shifting speed increases during a predetermined time T set by the reference value C0 after a time t1 at which there was an acceleration demand. As a result, the gear ratio changes early on. Therefore, the engine speed increases earlier than normal. That is, the slope of the engine speed increase is steeper than normal. In comparing this state during the predetermined time T after the time t1 at which there was an acceleration demand, it is evident that the engine speed according to this exemplary embodiment increases much more than does the normal engine speed. Therefore, an increase in boost pressure is promoted, after which the slope of the boost pressure increase becomes steeper. Because the fuel injection quantity increases in accordance with the boost pressure, the fuel injection quantity is larger than with the convention control, as is shown in FIG. 2.

Accordingly, with the control shown in FIG. 1, when the output of the engine 1 is increased in accordance with an acceleration demand, the shifting speed of the CVT 17 increases during the predetermined period of time immediately after the start of acceleration control in accordance with the acceleration demand. As a result, the gear ratio of the CVT 17 changes early on so the engine speed increases earlier than it would normally. This leads to a rapid increase in the boost pressure from the turbocharger 3. Therefore, even though the fuel injection quantity (the amount of fuel supplied) increases following an acceleration demand, the exhaust gas will not deteriorate, e.g., smoke will not be generated, because a sufficient charge of air into the engine 1 is ensured by the rapid increase in boost pressure. That is, acceleration response is improved because the increase of engine load does not have to be delayed. Also, because the shifting speed is increased temporarily only to promote an increase in boost pressure, there is no sudden increase in engine speed, output shaft torque or drive torque. Accordingly, any sense of discomfort or deterioration in ride due to noise or variations in torque is able to be prevented.

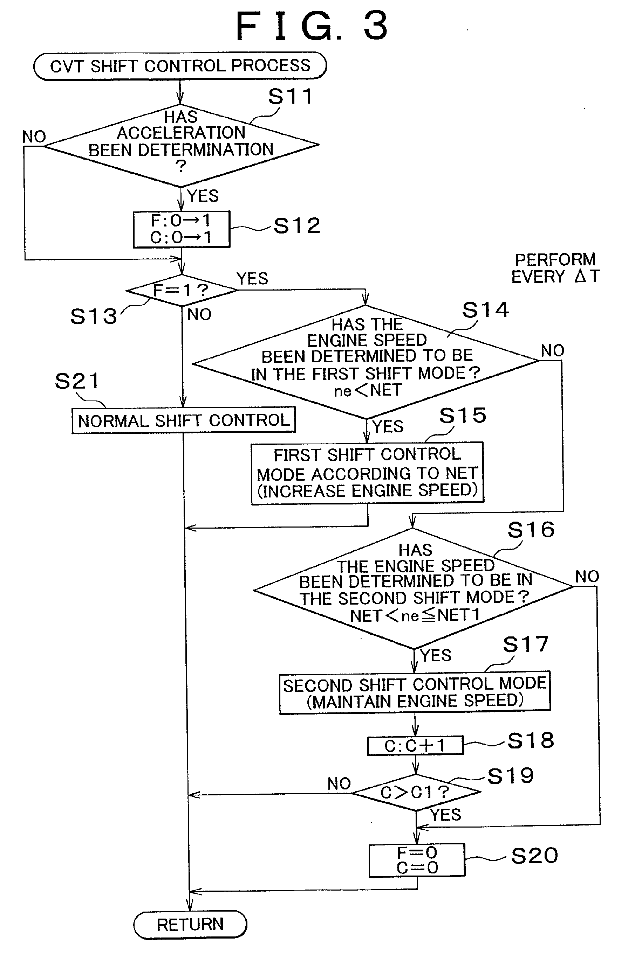

Next, another exemplary embodiment of the invention will be described. FIG. 3 is a flowchart showing one example of shift control during acceleration, which is performed by the control device according to the invention. This control is performed repeatedly at short, predetermined intervals of time Δt. Referring to FIG. 3, it is first determined whether there is an acceleration demand (Step S11). This determination can be made in the same manner as in the determination control in Step S1 in the control example of FIG. 1.

When the determination in Step S11 is YES due to the fact that there is an acceleration demand, the flag F and the counter C are both set to "engine 1" (Step S12). It is then determined whether the flag F is set to "engine 1" (Step S13). The control in Steps S12 and S13 is the same as the control in Steps S2 and S3, respectively, in the control shown in FIG. 1.

When the determination in Step S13 is YES due to a determination that there is an acceleration demand, it is determined in Step S14 whether the engine speed is in a first shift mode. This is a determination for selecting two characteristic controls that are different to be performed in the initial period of the acceleration control. It is determined whether an engine speed (i.e., the engine speed input to the transmission) engine speed ne at that point (the initial period of the acceleration control) is lower than a predetermined temporary target input engine speed NET. This temporary target input engine speed NET is a target input engine speed that is set as a temporary target value for rapidly increasing the engine speed so as to promote an increase in boost pressure. More specifically, the temporary target input engine speed NET is an engine speed that is higher than a transitional target input engine speed set by first order delay feedback control based on the difference between the target engine speed, which is set in accordance with an acceleration demand, and the engine speed at that point.

When the determination in Step S14 is YES because it is immediately after the start of acceleration control so the engine speed engine speed ne is lower than the temporary target input engine speed NET, the first shift control mode is employed in which the temporary target input engine speed is taken as the target engine speed (Step S15). As described above, because the temporary target input engine speed NET is higher than the transitional target input engine speed in normal shift control, the shifting speed becomes faster than the normal shifting speed according to the first order delay feedback control, such that the gear ratio is changed early on. Then, in Step S15, the slope of the engine speed increase becomes steeper than the normal slope due to the early changing of the gear ratio, thus promoting an increase in boost pressure. After Step S15, the control returns but the control in Step S15 continues to be performed until the next determination.

The temporary target input engine speed NET as described above increases the shifting speed of the transmission to promote an increase in the boost pressure of the supercharger. Therefore, just as when the shifting speed is increased in FIG. 1, it is preferable to set the temporary target input engine speed NET so as not to bring about a sudden change in drive torque or engine speed, and so that torque is not consumed unnecessarily due to an increase in inertia force following a change in engine speed.

When the engine speed (the engine speed input to the transmission) increases as time passes and the engine speed ne exceeds the temporary target input engine speed NET as a result, the determination in Step S14 is NO. In this case, it is determined in Step S16 whether the engine speed is in a second shift mode. That is, it is determined whether the engine speed ne is higher than the temporary target input engine speed NET and equal to, or lower than, a normal target input engine speed NET1 (corresponding to a predetermined mode).

When the first shift control mode is employed in Step S15, the engine speed increases as time passes and the determination in Step S16 is YES. In this case, the second shift control mode is employed (Step S17). This is control for changing the gear ratio such that the engine speed is maintained around the temporary target input engine speed NET. Generally speaking, the gear ratio is gradually reduced because the engine speed is maintained at a predetermined value due to the fact that the engine torque is increased as the load on the engine increases following an acceleration demand.

After Step S17, the counter C is increased by "engine 1" (Step S18). Then, during the time until the value of the counter C reaches a predetermined reference value C1, i.e., while the determination in Step S19 is NO, control for maintaining the engine speed continues. Then when time passes such that the value of the counter C exceeds the reference value C1 and the determination in Step S19 is YES, the flag F and the counter C are both reset to "0", after which control returns (Step S20). When the determination in Step S16 is NO, i.e., when the engine speed ne exceeds the target input engine speed NET1, control proceeds directly on to Step S20.

Thereafter, normal shift control is performed (Step S21) because the determination in Step S11 is NO and the determination in Step S13, which is performed as a result, is NO. In the event that the engine speed exceeds the target input engine speed NET1 after the first shift control mode, the control proceeds directly to Step S20, where the flag F and the counter C are reset to "0". After this, control returns.

Therefore, according to the control shown in FIG. 3, during the predetermined time immediately after the start of acceleration control, the gear ratio is changed such that the temporary target input engine speed NET becomes relatively high and the engine speed increases. As a result, the boost pressure of the supercharger increases. Therefore, just as when the control shown in FIG. 1 is performed, even though the fuel injection quantity (the amount of fuel supplied) following an acceleration demand increases, the exhaust gas will not deteriorate, e.g., smoke will not be generated, because a sufficient charge of air into the engine 1 is ensured. That is, acceleration response is improved because the increase in engine load does not have to be delayed. Also, because the first shift control mode performs a shift with a relatively high engine speed as a temporary target engine speed to promote an increase in boost pressure, there is no sudden increase in engine speed, output shaft torque or drive torque. Accordingly, any sense of discomfort or deterioration in ride due to noise or variations in torque is able to be prevented.

Now, a relationship between the foregoing embodiments and the invention will be briefly described. Step S1 and Step S22 corresponds to acceleration demand determining means in the invention, and Step S4 and Step S15 correspond to gear ratio controlling means. Also, Step S17 corresponds to input engine speed maintaining means and Step S21 corresponds to shift controlling means.

The vehicle described in these exemplary embodiments is provided with a turbocharger, however, the invention is not limited thereto. For example, the supercharger in this invention may be a supercharger which operates using mechanical energy from the internal combustion engine, in which the boost pressure changes according to the operating state thereof. Also, the transmission in this invention is not limited to a continuously variable transmission, but may be a step type transmission.

Further, the determination of an acceleration demand in this invention is not limited to the foregoing exemplary embodiments. That is, it can be said that even the slightest increase in the accelerator opening generally means that there is an acceleration demand. However, because, in the foregoing exemplary embodiments, the necessity and benefit of rapidly increasing the boost pressure are determined in the form of an "acceleration demand", the determination reference is set such that it will be determined that there has been an acceleration demand when a large rate of acceleration that is equal to, or greater than, a certain rate is demanded. Accordingly, instead of the determination reference in the foregoing exemplary embodiments, another condition that reflects a demanded rate of acceleration equal to, or greater than, a predetermined value (i.e., that reflects a state in which it is preferable to generate a rate of acceleration equal to, or greater than, a predetermined value) may be used as the condition to determine an "acceleration demand".

In order to solve the foregoing problems, this invention is characterised in that it is constructed so as to control the gear ratio at which the internal combustion engine should be operated so as to increase the boost pressure when there is an acceleration demand.

Therefore, when it has been determined that there has been an acceleration demand, the internal combustion engine is controlled by the transmission so as to increase the boost pressure by the supercharger based on that determination. As a result, even though the amount of fuel supplied to the internal combustion engine is increased based on that acceleration demand, the exhaust gas will not deteriorate, e.g., smoke will not be generated, due to the fact that the delay while the boost pressure increases is able to be eliminated or minimized. Also, acceleration response is improved because the increase in the fuel supply quantity does not have to be delayed. Furthermore, because the control of the transmission is not control to increase the gear ratio in order to increase the output shaft torque or the drive torque along with an acceleration demand, the fuel consumption, as well as unnecessary increase in the speed of the internal combustion engine is able to be minimized. Accordingly, it is possible to prevent the ride and the like from becoming uncomfortable.

Also, when it has been determined that there has been an acceleration demand, acceleration that increases the load on the internal combustion engine starts. At the same time, shift control for changing the gear ratio to a gear ratio according to the acceleration demand starts and the gear ratio is controlled so that the speed of the internal combustion engine becomes relatively high. As a result, the speed of the internal combustion engine increases rapidly, thereby promoting an increase in the boost pressure by the supercharger. Accordingly, the exhaust gas is prevented from deteriorating, e.g., smoke will not be generated, even though the load on the internal combustion engine increases based on the acceleration demand. That is, acceleration response is improved because the increase of engine load does not have to be delayed. Also, when the predetermined period of time has passed the gear ratio is controlled such that the speed of the internal combustion engine becomes relatively slower than it was before. Accordingly, because a speed increase of the internal combustion engine is inhibited, any vibration or noise generated by a rapid and excessive increase in the speed of the internal combustion engine, or any sense of discomfort or deterioration in ride arising therefrom, is able to be prevented.

Further, when it has been determined that there has been an acceleration demand, acceleration that increases the load on the internal combustion engine starts. At the same time, the target input engine speed is set in accordance with the acceleration demand. In addition, a temporary target input engine speed is set in which the engine speed is higher than a transitional input engine speed when the gear ratio is changed by a predetermined mode based on the target input engine speed that was set in accordance with the acceleration demand. At the start of acceleration, shift control is performed to reach that temporary target input engine speed. As a result, the shifting speed increases at the start of acceleration, which causes the speed of the internal combustion engine to rapidly increase, thereby bringing about a sudden increase in boost pressure. Accordingly, even though the load on the internal combustion engine increases according to the acceleration demand, the exhaust gas is prevented from deteriorating, e.g., smoke will not be generated, and the acceleration response is improved. Further, the input engine speed of the internal combustion engine is maintained at that temporary target input engine speed during the predetermined period of time. During that predetermined period of time, the boost pressure increases further such that, after the predetermined period of time has passed, the gear ratio is changed by the predetermined mode based on the initial target input engine speed. That is, the shifting speed is slowed relatively. Accordingly, because a speed increase of the internal combustion engine is inhibited, any vibration or noise generated by a rapid and excessive increase in the speed of the internal combustion engine, or any sense of discomfort or deterioration in ride arising therefrom, is able to be prevented.

Provided is a control device for a vehicle, for improving acceleration response by increasing a boost pressure without making the exhaust gas worse. A control device for a vehicle having a supercharger (3) for generating a boost pressure according to an operating state of an internal combustion engine (I) and a transmission (17) for changing a speed of the internal combustion engine in accordance with a gear ratio, further includes acceleration demand determining means (S1) for determining whether there has been an acceleration demand, and gear ratio controlling means (S4) for changing the speed of the internal combustion engine (1) so as to increase the boost pressure by changing the gear ratio when the acceleration demand is determined to have occurred.

## Claims

1. A control device for a vehicle having a supercharger (3) for generating a boost pressure in accordance with an operating state of an internal combustion engine (1) and a transmission (17) for changing a speed of the internal combustion engine (1) in accordance with a gear ratio, **characterised by** comprising:
acceleration demand determining means (S1, S11) for determining whether there has been an acceleration demand, and
gear ratio controlling means (S4, S15) for changing the gear ratio when it has been determined by the acceleration demand determining means (S1, S11) that there has been an acceleration demand to increase the speed of the internal combustion engine (1) in order to increase the boost pressure.

2. The control device according to claim 1, **characterised in that**:
the gear ratio controlling means (S4) controls the transmission (17) to have a gear ratio such that, for a predetermined period after the start of acceleration according to the acceleration demand when it has been determined that there was an acceleration demand , the speed of the internal combustion engine (1) becomes higher than a transitionally set engine speed when the gear ratio is changed in a predetermined mode, and controls the transmission (17) to have a gear ratio such that, after the predetermined period of time has passed, the speed of the internal combustion engine (1) becomes lower than the speed of the internal combustion engine (1) during the predetermined period of time.

3. The control device according to claim 1, **characterised in that**:
the transmission (17) sets a target input engine speed based on a running state of the vehicle and changes the gear ratio in a predetermined mode based on the target input engine speed, and
the gear ratio controlling means (S15) increases an engine speed input to the transmission (17) to a temporary target input engine speed (NET) that is higher than a transitionally set input engine speed when the gear ratio is changed in the predetermined mode,
input engine speed maintaining means (S17) is further provided for controlling the gear ratio so as to maintain the engine speed input to the transmission (17) at the temporary target input engine speed for a predetermined period of time, and
shift controlling means (S21) is further provided for changing the gear ratio in the predetermined mode after the predetermined period of time has passed.

4. The control device according to claim 3, **characterised in that**:
the input engine speed maintaining means (S17) maintains the engine speed input to the transmission (17) at the temporary target input engine speed for a predetermined period of time when the speed of the internal combustion engine (1) is higher than the temporary target input engine speed (NET) and equal to, or lower than, an upper limit engine speed (NET1).

5. The control device according to claim 4, **characterised in that**:
control according to an acceleration demand is not performed when the speed of the internal combustion engine (1) is higher than the upper limit engine speed (NET1).

6. The control device according to claim 1, **characterised in that**:
the speed of the internal combustion engine (1) is increased during a certain period of time after the start of acceleration according to the acceleration demand, by a slope of the speed of the internal combustion engine (1) becoming steep as a result of an increase in shifting speed of the gear ratio of the transmission (17), which changes so as to increase the speed of the internal combustion engine (1).

7. A control device for a vehicle configured such that a transmission is connected to an internal combustion engine having a supercharger, and that supercharger generates a boost pressure according to an operating state of the internal combustion engine, the control device **characterised by** comprising:
acceleration demand determining means for determining whether there has been an acceleration demand, and
gear ratio controlling means for changing a gear ratio of the transmission such that a speed of the internal combustion engine becomes higher than a transitionally set input engine speed when the gear ratio is changed in the predetermined mode for a predetermined period of time after the start of acceleration when it has been determined that there has been an acceleration demand, and becomes slower than the speed of the internal combustion engine during the predetermined period of time after that predetermined period of time has passed.

8. A control device for a vehicle configured such that a transmission for setting a target input engine speed based on a running state of the vehicle and changing a gear ratio in a predetermined mode based on that target input engine speed is connected to an internal combustion engine having a supercharger, and that supercharger generates a boost pressure according to an operating state of the internal combustion engine, the control device **characterised by** comprising:
acceleration demand determining means for determining whether there has been an acceleration demand,
temporary target input engine speed setting means for setting a temporary target input engine speed that is larger than a transitionally set input engine speed when the gear ratio is changed in the predetermined mode for a predetermined period of time after the start of acceleration when it has been determined by the acceleration demand determining means that there has been an acceleration demand,
input engine speed maintaining means for controlling the gear ratio so as to maintain the engine speed input into the transmission at that temporary target input engine speed for a predetermined period of time, and
shift controlling means for changing the gear ratio in the predetermined mode after the predetermined period of time has passed.

9. A control method for a vehicle, **characterised in that**:
a boost pressure of a supercharger (3) is increased by increasing a speed of an internal combustion engine (1) by changing a gear ratio of a transmission (17) when there has been an acceleration demand.

10. The control method according to claim 9, **characterised in that**:
the gear ratio is set such that, for a predetermined period of time after the start of acceleration according to the acceleration demand when it has been determined that there was the acceleration demand , the speed of the internal combustion engine (1) becomes higher than a transitionally set engine speed when the gear ratio is changed in a predetermined mode, and the gear ratio is set such that, after the predetermined period of time has passed, the speed of the internal combustion engine (1) becomes lower than the speed of the internal combustion engine (1) during the predetermined period of time.

11. The control method according to claim 9, **characterised in that**:
the engine speed input to the transmission (17) is increased to a temporary target input engine speed (NET) that is higher than a transitionally set input engine speed when the gear ratio is changed in a predetermined mode when the acceleration demand is determined to have occurred,
the gear ratio is controlled such that the engine speed input to the transmission (17) is maintained at the temporary target input engine speed for a predetermined period of time, and
the gear ratio is changed in the predetermined mode after the predetermined period of time has passed.

12. The control method according to claim 11, **characterised in that**:
when the acceleration demand has occurred,
the speed of the internal combustion engine (1) is increased to the temporary target input engine speed (NET),
the gear ratio is controlled such that the engine speed input to the transmission (17) is maintained at that temporary target input engine speed for a predetermined period of time when the speed of the internal combustion engine (1) is higher than the temporary target input engine speed (NET) and equal to, or lower than, an upper limit engine speed (NET1), and
control according to an acceleration demand is not performed when the speed of the internal combustion engine (1) is higher than the upper limit engine speed (NET1).
